# EUROPÄISCHE PATENTSCHRIFT

(11) **EP 4 208 359 B1**
(45) Veröffentlichungstag und Bekanntmachung des Hinweises auf die Patenterteilung: **09.10.2024**
(21) Anmeldenummer: 21759286.4
(22) Anmeldetag: 10.08.2021
(51) Int. Cl.: B60H 1/00, A61L 9/00

(54) **VERFAHREN ZUM VERRINGERN EINES RISIKOS EINER TRÖPFCHENINFEKTION IN EINEM INNENRAUM EINES FAHRZEUGS**
METHOD FOR REDUCING A RISK OF DROPLET INFECTION IN AN INTERIOR OF A VEHICLE
PROCÉDÉ DE RÉDUCTION D'UN RISQUE D'INFECTION PAR GOUTTELETTES À L'INTÉRIEUR D'UN VÉHICULE

(30) Priorität: 02.09.2020 DE 102020211044
(43) Veröffentlichungstag der Anmeldung: 12.07.2023
(73) Patentinhaber: VOLKSWAGEN AKTIENGESELLSCHAFT, 38440 Wolfsburg (DE)
(72) Erfinder: BADER, Viktor, 38448 Wolfsburg (DE)
(86) Internationale Anmeldenummer: PCT/EP2021/072309
(87) Internationale Veröffentlichungsnummer: WO 2022/048868

(56) Entgegenhaltungen:
- EP-A1- 3 296 653
- EP-A2- 3 284 621
- DE-A1- 102013 221 366
- JP-A- 2020 008 226
- US-A1- 2018 092 603
- US-A1- 2019 091 738

## Beschreibung

Die Erfindung betrifft ein Verfahren zum Verringern eines Risikos einer Tröpfcheninfektion in einem Innenraum eines Fahrzeugs sowie ein entsprechend eingerichtetes Fahrzeug.

Bei Fahrzeugen im Car-Sharing-Betrieb, in öffentlichen Verkehrsmitteln wie Bussen oder in autonom fahrenden Taxis können häufig wechselnde Personen mit einer erhöhten Wahrscheinlichkeit Krankheiten über Kontakt- oder Tröpfcheninfektion übertragen. Denn Krankheitserreger wie Viren oder Bakterien werden sehr häufig über Kontakt- oder Tröpfcheninfektion übertragen. Bei der Tröpfcheninfektion gelangen Krankheitserreger, die sich im Rachenraum oder im Atemtrakt einer Person befinden, beim Niesen, Husten, Atem und Sprechen durch winzige Speicheltröpfchen in den Atembereich bzw. Luftbereich vor der Person und werden anschließend von einem anderen Menschen in der Nähe eingeatmet bzw. direkt über die Schleimhäute der oberen Luftwege aufgenommen.

Manche Erreger können in Tröpfchen von sehr geringer Größe (< 5 µm) lange Zeit in der Luft schweben. Häufig werden Viren auf diesem Weg übertragen. Über Tröpfchen werden besonders Virenerkrankungen wie Windpocken, Masern, Coronaviren, grippale Infekte und die echte Grippe übertragen. Von den bakteriellen Erkrankungen werden zum Beispiel Scharlach sowie Meningokokken-Infektionen, die Hirnhautentzündungen auslösen können, durch Tröpfcheninfektion übertragen.

Aus den Dokumenten DE 10 2013 221 366 A1, EP 3 296 653 A1, US 2018/092603 A1, EP 3 284 621 A2, JP 2020 008 226 A und US 2019/091738 A1 sind verschiedene Lüftungssysteme und Verfahren zum Betreiben von Lüftungssystemen bekannt.

Aufgabe der Erfindung ist es, eine Tröpfcheninfektion in einem Innenraum eines Fahrzeugs zuverlässig und mit einfachen Mitteln zu verhindern.

Die voranstehende Aufgabe wird durch ein Verfahren zum Verringern eines Risikos einer Tröpfcheninfektion in einem Innenraum eines Fahrzeugs nach Anspruch 1 und ein Kraftfahrzeug nach Anspruch 8 gelöst. Weitere Vorteile und Details der Erfindung ergeben sich aus den Unteransprüchen. Dabei gelten Merkmale und Details, die im Zusammenhang mit dem erfindungsgemäßen Verfahren beschrieben sind, selbstverständlich auch im Zusammenhang mit dem erfindungsgemäßen Fahrzeug und jeweils umgekehrt, sodass bezüglich der Offenbarung zu den einzelnen Erfindungsaspekten stets wechselseitig Bezug genommen wird beziehungsweise werden kann.

Nach einem ersten Aspekt der Erfindung wird die Aufgabe gelöst durch ein Verfahren zum Verringern eines Risikos einer Tröpfcheninfektion in einem Innenraum eines Fahrzeugs, wobei das Verfahren die Schritte aufweist:
(a) Ermitteln eines von zumindest einem Insassen des Fahrzeugs ausgehenden Risikos einer Tröpfcheninfektion, wobei das von dem zumindest einem Insassen des Fahrzeugs ausgehende Risiko einer Tröpfcheninfektion anhand einer optischen Erkennung des zumindest einen Insassen ermittelt wird, wobei die optische Erkennung zum Erkennen eines Atemschutzes des zumindest einen Insassen eingerichtet ist,
(b) Wählen zumindest einer fahrzeugseitigen Maßnahme zum Verringern des Risikos einer Tröpfcheninfektion, wobei die zumindest eine fahrzeugseitige Maßnahme in Abhängigkeit von dem ermittelten Risiko einer Tröpfcheninfektion gewählt wird, und
(c) Durchführen der zumindest einen gewählten fahrzeugseitigen Maßnahme zum Verringern des Risikos einer Tröpfcheninfektion.

Demgemäß löst die Erfindung die eingangs erwähnte Aufgabe dadurch, dass zunächst ein von zumindest einem Insassen des Fahrzeugs ausgehendes Risiko einer Tröpfcheninfektion ermittelt wird, um auf Basis dessen bzw. in Abhängigkeit davon die zumindest eine fahrzeugseitige Maßnahme zum Verringern des Risikos einer Tröpfcheninfektion zu wählen und durchzuführen. Die fahrzeugseitige Maßnahme kann dabei auf ein Verringern des Risikos einer Tröpfcheninfektion eines oder mehrerer anderer Insassen des Fahrzeugs gerichtet sein, die sich neben dem zumindest einen Insassen, von dem ausgehend ein Risiko einer Tröpfcheninfektion ermittelt worden ist, in dem Fahrzeug befinden. Alternativ oder zusätzlich kann die fahrzeugseitige Maßnahme aber auch auf ein Verringern des Risikos einer Tröpfcheninfektion eines oder mehrerer nachfolgender Insassen des Fahrzeugs gerichtet sein, die sich nach dem zumindest einen Insassen, von dem ausgehend ein Risiko einer Tröpfcheninfektion ermittelt worden ist, in dem Fahrzeug befinden, also etwa eine nachfolgende Fahrt mit dem Fahrzeug aufnehmen, welches sich hierzu beispielweise im Carsharing-Betrieb befinden kann oder ein autonomes Roboter-Taxi sein kann. Mit anderen Worten kann mit dem erfindungsgemäßen Verfahren vorgesehen sein, das Risiko einer Tröpfcheninfektion in einem Innenraum des Fahrzeugs zwischen Insassen bei derselben Fahrt und/oder zwischen Insassen aufeinanderfolgenden Fahrten zu verringern. Insoweit bezieht sich das von zumindest einem Insassen ausgehende Risiko einer Tröpfcheninfektion, das ermittelt und zur Verringerung welcher zumindest eine fahrzeugseitige Maßnahme gewählt wird, auf jeweils einen anderen Insassen, der sich bei derselben Fahrt und/oder einer nachfolgenden Fahrt im Innenraum desselben Fahrzeugs befindet bzw. eine Sitzposition einnimmt.

Zum Ermitteln des von dem zumindest einem Insassen des Fahrzeugs ausgehenden Risikos der Tröpfcheninfektion kann insbesondere ein Krankheitszustand des zumindest einen Insassen ermittelt werden, der auf eine Gefahr einer Tröpfcheninfektion eines anderen Insassen, der sich auf derselben Fahrt oder auf einer nachfolgenden Fahrt in dem Innenraum befindet, schließen lässt. Hierzu können Krankheitssymptome des zumindest einen Insassen ermittelt werden. Die Krankheitssymptome können beispielsweise Fieber, Husten, Niesen, Müdigkeitserscheinungen und dergleichen sein. Von einer Anzahl und/oder einer Intensität der Krankheitssymptome kann dann das Risiko einer Tröpfcheninfektion abgeleitet bzw. ermittelt werden. Unterschiedliche Krankheitssymptome können dabei mit einer unterschiedlichen Gewichtung in die Ermittlung des Risikos einer Tröpfcheninfektion eingehen.

Außerdem ist vorgesehen, dass das von dem zumindest einem Insassen des Fahrzeugs ausgehende Risiko anhand einer optischen Erkennung des zumindest einen Insassen ermittelt wird. Durch die optische Erkennung kann wiederum ebenso eine müde Körperlage des Insassen erkannt werden und ferner auch eine mögliche Rötung, ein Schwitzen und dergleichen, was auf ein Fieber hindeuten kann. Auch eine direkte Fiebermessung mittels beispielsweise eines Infrarotsensors ist möglich. Durch eine Kombination der vorgenannten Erkennungen kann das von zumindest einem Insassen ausgehende Risiko einer Tröpfcheninfektion für andere Insassen sehr zuverlässig bestimmt werden, da unterschiedliche Krankheitssymptome festgestellt werden können.

Entsprechend ist vorgesehen, dass die optische Erkennung zum Erkennen eines Atemschutzes des zumindest einen Insassen eingerichtet ist. Dass die optische Erkennung einen Atemschutz, wie beispielsweise einen Mund-Nasen-Schutz bzw. eine Atemmaske, erkennt, ermöglicht eine Wahl der fahrzeugseitigen Maßnahme, die in ihrer Dauer und Intensität entsprechend reduziert werden kann. Dies erhöht wiederum den Komfort für den zumindest einen Insassen und reduziert den Energiebedarf für das Durchführen der zumindest einen fahrzeugseitigen Maßnahme.

Es kann vorgesehen sein, dass für jeden von zumindest zwei Insassen des Fahrzeugs ein von dem jeweiligen Insassen des Fahrzeugs ausgehendes Risiko einer Tröpfcheninfektion ermittelt wird und die zumindest eine fahrzeugseitige Maßnahme zum Verringern des Risikos einer Tröpfcheninfektion für jeden Insassen individuell gewählt wird. So kann die fahrzeugseitige Maßnahme individuell auf den oder die Insassen ausgerichtet werden, von dem oder von denen ein Risiko einer Tröpfcheninfektion oder ein erhöhtes Risiko einer Tröpfcheninfektion ausgeht. Ferner kann für jeden der Insassen eine individuelle fahrzeugseitige Maßnahme gewählt werden. So kann das von mehreren Insassen ausgehende Risiko einer Tröpfcheninfektion unter Wahl geeigneter Maßnahmen vermindert werden, ohne dass die fahrzeugseitigen Maßnahmen alle Insassen erfassen oder überzogen werden. Dadurch kann trotz fahrzeugseitiger Maßnahmen ein möglichst großer Komfort im Fahrzeug gewährleistet werden.

Auch kann vorgesehen sein, dass eine Dauer und/oder eine Intensität der zumindest einen fahrzeugseitigen Maßnahme in Abhängigkeit von dem ermittelten Risiko einer Tröpfcheninfektion gewählt wird. Entsprechend kann dadurch sichergestellt werden, dass die gewählte fahrzeugseitige Maßnahme hinreichend zum Verringern des Risikos der Tröpfcheninfektion ist, jedoch den Komfort des zumindest einen Insassen oder der mehreren Insassen nicht oder nicht übermäßig beeinträchtigt. Ferner kann auch ein Energieverbrauch des Fahrzeugs trotz des Durchführens der zumindest einen fahrzeugseitigen Maßnahme gering gehalten werden.

Alternativ oder zusätzlich können die Dauer und/oder Intensität abhängig von verfügbaren Informationen über Infektionswellen oder Regionen, die von einer Infektionswelle betroffen sind, gewählt werden. Diese Informationen können beispielsweise über eine drahtlose Kommunikationsschnittstelle des Fahrzeugs mit dem Internet bereitgestellt werden.

Ferner kann vorgesehen sein, dass das Durchführen der zumindest einen gewählten fahrzeugseitigen Maßnahme zum Verringern des Risikos einer Tröpfcheninfektion während eines Stillstands des Fahrzeugs und ohne Insassen erfolgt. Entsprechend kann die zumindest eine fahrzeugseitige Maßnahme nicht nur während der Fahrt, sondern auch nach der Fahrt durchgeführt werden. Demgemäß eignet sich das erfindungsgemäße Verfahren insbesondere in einem Carsharing-Betrieb oder bei Betrieb eines autonomen Roboter-Taxis als Fahrzeug. Beim Wechsel der Insassen zwischen den einzelnen Fahrten kann das Risiko einer Tröpfcheninfektion des nachfolgenden zumindest einen Insassen, das von zumindest einem zuvor in dem Innenraum während einer Fahrt befindlichen Insassen ausgeht, effektiv verringert werden.

Auch kann vorgesehen sein, dass die zumindest eine gewählte fahrzeugseitige Maßnahme ein wenigstens teilweises Öffnen zumindest eines Fensters des Fahrzeugs ist. Dabei kann vorgesehen sein, dass ein Öffnungsgrad des zumindest einen Fensters eine Intensität der zumindest einen fahrzeugseitigen Maßnahme ist. Auch kann vorgesehen sein, dass jeweils zumindest das Fenster an der Sitzposition des Insassen geöffnet wird, von dem das ermittelte Risiko einer Tröpfcheninfektion ausgeht. Entsprechend müssen nicht alle Fenster des Fahrzeugs geöffnet werden, was als unangenehm empfunden werden kann. Vielmehr kann es genügen, einzelne Fenster selektiv zu öffnen. Mit Fenstern sind dabei insbesondere die Seitenfenster und ein ggf. vorhandenes Dachfenster mit elektrischer Ansteuerung bzw. elektrischem Motor zum Öffnen dieser gemeint. Entsprechend können diese Fenster teilweise oder vollständig automatisch für eine vorgegebene Zeit geöffnet bzw. eingefahren werden, sodass über die offenen Fenster ein Luftaustausch zwischen dem Innenraum des Fahrzeugs und der Umgebung stattfinden kann.

Zudem kann vorgesehen sein, dass die zumindest eine gewählte fahrzeugseitige Maßnahme ein Steuern des Lüftungssystems des Fahrzeugs zumindest in einem Bereich vor dem wenigstens einen Insassen ist. Bei dem Lüftungssystem kann es sich insbesondere um das Klima-Belüftungssystem des Fahrzeugs handeln. Insbesondere in dem Atembereich oder Luftbereich desjenigen oder derjenigen Insassen, von dem oder von denen gemäß der Ermittlung ein Risiko einer Tröpfcheninfektion ausgeht, kann das Lüftungssystem derart betrieben werden, dass die ggf. mit Tröpfchen kontaminierte Luft vor diesem oder diesen Insassen weg transportiert wird, ohne vorbei an anderen Insassen transportiert zu werden. Vorteilhafterweise kann das Steuern des Lüftungssystems mit dem wenigstens teilweisen Öffnen der Fenster kombiniert werden, um einen raschen Luftaustausch mit der Umgebung zu provozieren. Für jede dieser Luftaustauschmaßnahmen kann abhängig von dem ermittelten Risiko einer Tröpfcheninfektion ein Zeitrahmen vorgegeben werden. Der Zeitrahmen kann beispielsweise im Bereich von 1 bis 5 Minuten liegen.

Insbesondere kann der oder können die Atembereiche von Insassen, von denen ein Risiko einer Tröpfcheninfektion ausgeht, bereits während der Fahrt zeitnah nach dem Ermitteln des Risikos, beispielsweise bei Husten oder Niesen eines Insassen, so mit Luft durch wenigstens teilweises Öffnen eines Fensters und/oder Steuerung des Lüftungssystems durchströmt werden, dass die zugehörigen Tröpfchen in der Luft in dem Atembereich oder den Atembereichen der Insassen durch eine Luftströmung wegtransportiert werden, so dass sie nicht über Tröpfcheninfektion andere Insassen infizieren können. Ferner kann dies derart erfolgen, dass sich Tröpfchen möglichst auch nicht auf Oberflächen in dem Innenraum niederlassen können. Bei dem Erzeugen der Luftströmung sollte dabei bevorzugt berücksichtigt werden, dass keine weiteren Insassen so in diese Luftströmung geraten können, dass sie mit den Tröpfchen in Kontakt kommen können. Die Luftströmung wird also vorzugsweise derart gerichtet, dass möglichst viele Tröpfchen erfasst werden und auf kürzestem Weg zu einem Luftauslass gerichtet werden. Der Luftauslass kann dabei so gelegen sein, dass in unmittelbarer Umgebung des Luftauslasses kein Insasse den Bereich um den Luftauslass berühren kann und/oder der Bereich in dem sich Tröpfchen am Luftauslass niederlassen können, zusätzlich optisch gekennzeichnet ist, um Insassen vor einer Berührung zu warnen. Auch kann vorgesehen sein, dass vor der Durchführung der fahrzeugseitigen Maßnahme auf die zumindest eine fahrzeugseitige Maßnahme hingewiesen wird. Entsprechend kann das Verfahren den weiteren Schritt eines Hinweisens auf die zumindest eine fahrzeugseitige Maßnahme zwischen dem Wählen der zumindest einen fahrzeugseitigen Maßnahme und dem Durchführen der zumindest einen fahrzeugseitigen Maßnahme aufweisen. Der Hinweis kann beispielsweise durch eine Anzeige auf einem Bildschirm und/oder durch eine akustische Ansage in dem Innenraum erfolgen. Dadurch wird der Insasse oder werden die Insassen von der zumindest einen fahrzeugseitigen Maßnahme nicht überrascht und können sich nicht erschrecken bzw. wird vermieden, dass die Insassen die fahrzeugseitige Maßnahme nicht zuordnen können. So kann den Insassen in dem Innenraum beispielsweise nach einem Niesen oder Husten mitgeteilt werden, dass eine fahrzeugseitige Maßnahme aktiviert wird, die Tröpfchen in der Luft von den Insassen wegtransportiert, um sie oder folgende Insassen zu schützen. Dabei kann aber auch vorgesehen sein, dass die Insassen in einem Nutzerprofil des Fahrzeugs eine Einstellung hinterlegen können, dass sie ohne Ankündigung mit dem Vorgehen einverstanden sind und entsprechende fahrzeugseitige Maßnahmen ohne entsprechenden Hinweis erfolgen.

Ferner kann vorgesehen sein, dass die zumindest eine gewählte fahrzeugseitige Maßnahme ein Absaugen von Luft vor dem wenigstens einen Insassen ist. Die Luft kann beispielsweise an einer entsprechenden Oberfläche des Fahrzeugs im Innenraum abgesaugt werden, die im Atembereich bzw. Luftbereich vor dem jeweiligen Insassen liegt. So kann also alternativ oder zusätzlich zu dem Steuern des Lüftungssystems in dem Fahrzeug durch entsprechend eingerichtete Oberflächen in dem Innenraum Luft eingesaugt werden. Die Oberfläche kann beispielsweise entsprechend perforiert sein, um die Luft durch die perforierten Öffnungen in der Oberfläche einzusaugen. Dadurch kann bei einem Insassen gezielt die Luft so eingesaugt werden, dass Tröpfchen möglichst nicht in den Atembereich bzw. Luftbereich von anderen Insassen gelangen und stattdessen auf kürzestem Weg aus dem Innenraum bzw. der Fahrzeugkabine entfernt werden kann.

Gemäß einem zweiten Aspekt der Erfindung wird die eingangs erwähnte Aufgabe gelöst durch ein Fahrzeug gemäß Anspruch 8 mit
(a) zumindest einer Ermittlungseinheit zum Ermitteln eines von zumindest einem Insassen des Fahrzeugs ausgehenden Risikos einer Tröpfcheninfektion,
(b) einer Wähleinheit zum Wählen zumindest einer fahrzeugseitigen Maßnahme zum Verringern des Risikos einer Tröpfcheninfektion, wobei die zumindest eine fahrzeugseitige Maßnahme in Abhängigkeit von dem ermittelten Risiko einer Tröpfcheninfektion gewählt wird, und
(c) einer Durchführeinheit zum Durchführen der zumindest einen gewählten fahrzeugseitigen Maßnahme zum Verringern des Risikos einer Tröpfcheninfektion in einem Innenraum des Fahrzeugs, wobei das Fahrzeug zur Durchführung eines erfindungsgemäßen Verfahrens ausgebildet ist.

Eine weitere Ermittlungseinheit kann entsprechend eine akustische Einheit für eine akustische Erkennung sein. Die akustische Einheit kann beispielsweise ein Mikrofon im Innenraum bzw. der Fahrzeugkabine des Fahrzeugs sein. Die akustische Einheit kann zum Erkennen von Krankheitssymptomen des zumindest einen Insassen eingerichtet sein. Dazu kann die akustische Einheit ferner dazu eingerichtet sein, Sprache und/oder Atemgeräusche des zumindest einen Insassen zu analysieren, um dadurch Krankheitssymptome zu erkennen. Für die Analyse kann künstliche Intelligenz eingesetzt werden.

Eine weitere Ermittlungseinheit kann auch eine Bewegungserkennungseinheit für eine Bewegungserkennung sein. Die Bewegungserkennungseinheit kann beispielsweise zumindest ein Kraftsensor oder mehrere Kraftsensoren in einem oder mehreren Fahrzeugsitzen des Fahrzeugs sein. Der oder die Kraftsensoren können dazu eingerichtet sein, eine Druckverteilung und/oder eine Bewegung des Insassen auf dem Fahrzeugsitz bzw. auf den Fahrzeugsitzen zu erkennen, um so die Haltung des Insassen zu analysieren. Entsprechend kann die Bewegungserkennungseinheit zum Erkennen von Müdigkeitserscheinungen und/oder Krankheitssymptomen des zumindest einen Insassen eingerichtet sein.

Erfindungsgemäß ist die zumindest eine Ermittlungseinheit eine optische Einheit. Die optische Einheit kann beispielsweise eine Kamera sein. Die Kamera kann sich in dem Innenraum befinden. Die Kamera kann sich alternativ oder zusätzlich am Außenbereich des Fahrzeugs befinden und bereits vor dem Einsteigen des zumindest einen Insassen in das Fahrzeug eine Aufnahme des zumindest einen Insassen tätigen. Die Kamera kann über eine Gesten- und/oder Bewegungserkennung zur Erkennung der Körperhaltung des zumindest einen Insassen verfügen. Erfindungsgemäß ist die Kamera zum optischen Erkennen eines Atemschutzes des zumindest einen Insassen eingerichtet.

Eine weitere mögliche Ermittlungseinheit ist beispielsweise ein Infrarotsensor oder eine Infrarotkamera, der oder die zum Erkennen von Fieber des Insassen eingerichtet sein kann. Auch ein Temperatursensor oder mehrere Temperatursensoren an den Fahrzeugsitzen und/oder am Lenkrad können zur Fiebererkennung eingerichtet sein.

Einer weitere mögliche Ermittlungseinheit sind Feuchtigkeitssensoren, die beispielsweise an den Fahrzeugsitzen und/oder am Lenkrad angeordnet werden können. Mittels solcher Feuchtigkeitssensoren lässt sich ein verstärktes Schwitzen als Krankheitssymptom erkennen. Durch eine geeignete Bildanalyse der optischen Einheit kann dies ebenfalls oder alternativ ermöglicht werden.

Möglich ist auch, dass die Ermittlungseinheit andere Sensoren zum Erfassen von Bio-Vital-Parametern der Insassen aufweisen. Insbesondere kann eine weitere Ermittlungseinheit eine Smartwatch des Insassen sein, die sich drahtlos mit dem Fahrzeug verbinden lässt. Dann kann die Wähleinheit unmittelbar auf die von der Smartwatch erfassten Bio-Vital-Parameter zurückgreifen und so eine sehr präzise Ermittlung des von dem zumindest einem Insassen des Fahrzeugs ausgehenden Risikos einer Tröpfcheninfektion vornehmen.

Das Fahrzeug kann mehrere gleiche, beispielsweise für jeden Insassen bzw. Fahrzeugsitz des Fahrzeugs, und/oder unterschiedliche der vorgenannten Ermittlungseinheiten aufweisen.

Die Wähleinheit kann Teil eines Steuergeräts oder ein Steuergerät sein, mittels dem die jeweilige zumindest eine fahrzeugseitige Maßnahme gewählt wird. Dazu kann in der Wähleinheit beispielsweise eine Look-Up-Tabelle oder Funktion hinterlegt sein, die bestimmten ermittelten Risiken einer Tröpfcheninfektion eine fahrzeugseitige Maßnahme zum Verringern des Risikos einer Tröpfcheninfektion zuordnet. Auch kann die Wähleinheit bzw. die darin enthaltene Look-Up-Tabelle oder Funktion ferner dazu eingerichtet sein, die fahrzeugseitige Maßnahme einer Position im Innenraum des Fahrzeugs, also etwa einer Sitzposition und damit einem Insassen, zuzuordnen. Dies kann durch entsprechende Zuordnung der Wähleinheit bzw. Ansteuerung der Durchführeinheit des Steuergeräts erfolgen. So kann beispielsweise das jeweilige Fenster durch den entsprechenden Fensterhebermotor zum Öffnen des Fensters, der eine mögliche Durchführeinheit darstellt, angesteuert werden.

Das Fahrzeug kann demgemäß mehrere Durchführeinheiten zum Durchführen unterschiedlicher gewählter fahrzeugseitiger Maßnahmen zum Verringern des Risikos von Tröpfcheninfektionen in dem Innenraum des Fahrzeugs aufweisen. Eine Durchführeinheit kann entsprechend beispielsweise ein Fensterhebermotor, ein Lüftungssystem, insbesondere Klima-Belüftungssystem, eine perforierte Oberfläche zum Absaugen der Luft und dergleichen sein.

Anhand der beigefügten Zeichnung wird die Erfindung nachfolgend näher erläutert.

Es zeigen:
- Fig. 1: in einer schematischen Ansicht den Ablauf eines Ausführungsbeispiels eines erfindungsgemäßen Verfahrens, und
- Fig. 2: in einer schematischen Ansicht ein Fahrzeug gemäß einem Ausführungsbeispiel der Erfindung.

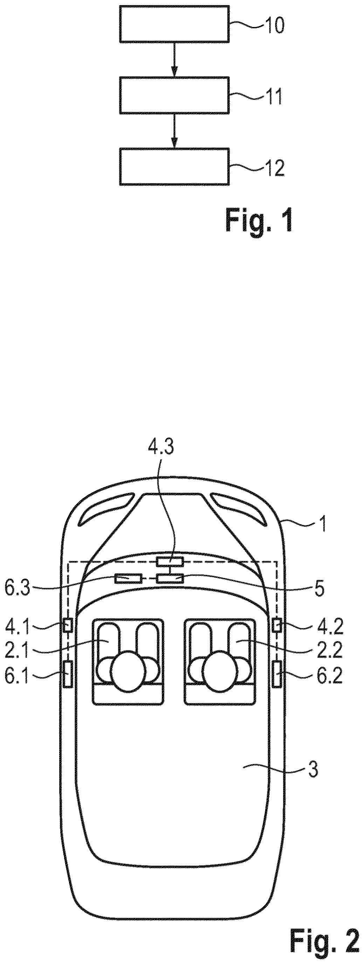

Elemente mit gleicher Funktion und Wirkungsweise sind in den Figuren 1 bis 2 jeweils mit denselben Bezugszeichen versehen. Soweit ein Element mehrmals vorhanden ist, wird es fortlaufend nummeriert, wobei die fortlaufende Nummerierung hinter dem Bezugszeichen angeführt und mit einem Punkt von dem Bezugszeichen getrennt wird.

Das schematisch in Figur 1 dargestellte Verfahren gemäß einem Ausführungsbeispiel der Erfindung geht von einem beispielhaften Fahrszenario aus, bei dem das Fahrzeug 1 aus Figur 2 in einer ersten Fahrt mit zwei Insassen 2.1, 2.2 besetzt und gefahren wird und anschließend eine zweite Fahrt mit einem oder mehreren anderen Insassen 2 absolviert. Das Fahrzeug 1 unterliegt insoweit einem Carsharing-Betrieb mit unterschiedlichen Nutzern bzw. Insassen 2. In der Figur 2 ist der Innenraum 3 des Fahrzeugs 1 mit den zwei Insassen 2.1, 2.2 der ersten Fahrt gezeigt. Das im Nachstehenden erläuterte Verfahren gemäß dem Ausführungsbeispiel der Erfindung bezieht sich vorliegend nur auf die erste Fahrt und ggf. auf einen Zeitraum danach und vor der zweiten Fahrt.

Die Angabe von zwei Insassen 2.1, 2.2 bei der ersten Fahrt ist dabei lediglich beispielhaft zur verständlichen Erläuterung des Verfahrens gemäß dem Ausführungsbeispiel der Erfindung gewählt. Bei der ersten Fahrt kann auch nur ein Insasse 2 oder es können mehr als zwei Insassen 2 in dem Innenraum 3 des Fahrzeugs 1 transportiert werden.

Wie Figur 1 nun zeigt, weist das Verfahren den ersten Verfahrensschritt 10 eines Ermittelns eines von zumindest einem Insassen 2.1, 2.2 des Fahrzeugs 1 ausgehenden Risikos einer Tröpfcheninfektion auf. Dieser erste Verfahrensschritt 10 wird mittels Ermittlungseinheiten 4.1, 4.2, 4.3 in dem Innenraum 3 des Fahrzeugs 1 durchgeführt. Die Ermittlungseinheiten 4.1, 4.2 sind hier beispielhaft jedem der Insassen 2.1, 2.2 zugeordnet und als Mikrofone ausgebildet. Durch die unterschiedliche Ausrichtung und Distanz der Mikrofone relativ zu den Insassen 2.1, 2.2 lassen sich Sprache und Geräusche der Insassen 2.1, 2.2 eindeutig zuordnen. Dadurch können Sprache und Geräusche jedes der Insassen 2.1, 2.2 während der Fahrt aufgenommen und analysiert werden.

Wird nun beispielsweise bei dem Insassen 2.1 mittels der Ermittlungseinheit 4.1 ermittelt, dass dieser häufig niest und hustet, ermittelt die Ermittlungseinheit 4.1 das von dem Insassen 2.1 ausgehende Risiko einer Tröpfcheninfektion des anderen Insassen 2.2. Vorgesehen sein kann auch, dass die Ermittlungseinheiten 4.1, 4.2, 4.3 mit einer nicht gezeigten zentralen Einheit verbunden sind, die die ermittelten Daten von den Ermittlungseinheiten 4.1, 4.2, 4.3 empfängt und das Risiko einer Tröpfcheninfektion ermittelt. Entsprechend überträgt die Ermittlungseinheit 4.1 oder die zentrale Einheit das ermittelte Risiko an eine Wähleinheit 5.

Erfindungsgemäß werden optische Ermittlungseinheiten 4 zur Ermittlung des Risikos herangezogen wobei Ermittlungseinheiten 4.1, 4.2, beispielsweise in Form von Kameras, genutzt werden. Vorliegend ist eine weitere Ermittlungseinheit 4.3 für beide Insassen 2.1, 2.2 als eine Kamera ausgebildet. Diese Kamera ist dazu eingerichtet, einen Atemschutz bzw. einen Mund-Nasen-Schutz der Insassen 2.1, 2.2 zu detektieren. Wenn die Ermittlungseinheit 4.3 eine solche bei dem Insassen 2.1 detektiert, kann das Risiko einer Tröpfcheninfektion trotz des häufigen Hustens und Niesens als verringert bzw. reduziert ermittelt werden.

Die Wähleinheit 5 wählt in einem zweiten Verfahrensschritt 11 und in Abhängigkeit von dem zuvor ermittelten Risiko einer Tröpfcheninfektion zumindest eine fahrzeugseitige Maßnahme zum Verringern des Risikos einer Tröpfcheninfektion. Vorliegend stehen die Möglichkeiten bereit, ein als Durchführeinheit 6.1 ausgebildetes Seitenfenster 6.1 des Fahrzeugs 1 an der Seite des Insassen 2.1 zu öffnen, um einen Austausch von Luft zwischen dem Innenraum 3 und der Umgebung des Fahrzeugs 1 zu provozieren. Ferner steht aber auch die Möglichkeit zur Verfügung, die Luft vor dem Insassen 2.1 durch eine als perforierte Oberfläche 6.3 ausgebildete Durchführeinheit 6.3 abzusaugen.

Vorliegend wählt die Wähleinheit 5 in dem zweiten Verfahrensschritt 11 das Absaugen der Luft durch die Durchführeinheit 6.3 gemäß dem zuvor ermittelten Risiko einer Tröpfcheninfektion ausgehend von dem Insassen 2.1. Diese Maßnahme ist etwas milder als etwa das Öffnen des Seitenfensters 6.1 des Fahrzeugs 1 bzw. Betätigten der Durchführeinheit 6.1, da es als weniger beeinträchtigend bzw. störend hinsichtlich des Komforts der Fahrt mit dem Fahrzeug 1 empfunden wird. Abhängig von der Häufigkeit des erkannten Hustens und Niesens des Insassen 2.1 kann eine Dauer und/oder Intensität des Absaugens der Luft durch die als perforierte Oberfläche 6.3 ausgebildete Durchführeinheit 6.3 bestimmt werden.

In dem dritten Verfahrensschritt 12 wird die zuvor gewählte fahrzeugseitige Maßnahme schließlich durchgeführt, um das ermittelte Risiko einer Tröpfcheninfektion ausgehend von dem Insassen 2.1 für den Insassen 2.2 zu verringern.

Neben der zuvor beschriebenen fahrzeugseitigen Maßnahme kann zum Schutz der weiteren Insassen 2 bei der zweiten Fahrt ferner eine weitere fahrzeugseitige Maßnahme gewählt werden, um auch diese Insassen 2 vor einer Tröpfcheninfektion zu schützen. Hierzu kann die Wähleinheit 5 eine weitere fahrzeugseitige Maßnahme wählen, die nach dem Verlassen der Insassen 2.1, 2.2 des Fahrzeugs 1 nach der ersten Fahrt und im Stillstand des Fahrzeugs 1 erfolgen kann. Entsprechend kann hier beispielsweise das Öffnen der Seitenfenster 6.1, 6.2 bzw. Betätigen der Durchführeinheiten 6.1, 6.2 als fahrzeugseitige Maßnahme gewählt werden, da ein Komfort von Insassen 2 nicht mehr berücksichtigt werden muss und sich damit eine besonders intensive fahrzeugseitige Maßnahme durchführen lässt.

### Bezugszeichenliste

- 1: Fahrzeug
- 2: Insasse
- 3: Innenraum
- 4: Ermittlungseinheit
- 5: Wähleinheit
- 6: Durchführeinheit, Fenster, Seitenfenster, perforierte Oberfläche

- 10: erster Verfahrensschritt
- 11: zweiter Verfahrensschritt
- 12: dritter Verfahrensschritt

## Patentansprüche

1. Verfahren zum Verringern eines Risikos einer Tröpfcheninfektion in einem Innenraum (3) eines Fahrzeugs (1), wobei das Verfahren die Schritte aufweist:
(a) Ermitteln eines von zumindest einem Insassen (2) des Fahrzeugs (1) ausgehenden Risikos einer Tröpfcheninfektion, wobei das von dem zumindest einem Insassen (2) des Fahrzeugs (1) ausgehende Risiko einer Tröpfcheninfektion anhand einer optischen Erkennung des zumindest einen Insassen ermittelt wird, wobei die optische Erkennung zum Erkennen eines Atemschutzes des zumindest einen Insassen (2) eingerichtet ist,
(b) Wählen zumindest einer fahrzeugseitigen Maßnahme zum Verringern des Risikos einer Tröpfcheninfektion, wobei die zumindest eine fahrzeugseitige Maßnahme in Abhängigkeit von dem ermittelten Risiko einer Tröpfcheninfektion gewählt wird, und
(c) Durchführen der zumindest einen gewählten fahrzeugseitigen Maßnahme zum Verringern des Risikos einer Tröpfcheninfektion.

2. Verfahren nach Anspruch 1, wobei für jeden von zumindest zwei Insassen (2) des Fahrzeugs (1) ein von dem jeweiligen Insassen (2) des Fahrzeugs (1) ausgehendes Risiko einer Tröpfcheninfektion ermittelt wird und die zumindest eine fahrzeugseitige Maßnahme zum Verringern des Risikos einer Tröpfcheninfektion für jeden Insassen (2) individuell gewählt wird.

3. Verfahren nach Anspruch 1 oder 2, wobei eine Dauer und/oder eine Intensität der zumindest einen fahrzeugseitigen Maßnahme in Abhängigkeit von dem ermittelten Risiko einer Tröpfcheninfektion gewählt wird.

4. Verfahren nach einem der voranstehenden Ansprüche, wobei das Durchführen der zumindest einen gewählten fahrzeugseitigen Maßnahme zum Verringern des Risikos einer Tröpfcheninfektion während eines Stillstands des Fahrzeugs (1) und ohne Insassen (2) erfolgt.

5. Verfahren nach einem der voranstehenden Ansprüche, wobei die zumindest eine gewählte fahrzeugseitige Maßnahme ein wenigstens teilweises Öffnen zumindest eines Fensters (6) des Fahrzeugs (1) ist.

6. Verfahren nach einem der voranstehenden Ansprüche, wobei die zumindest eine gewählte fahrzeugseitige Maßnahme ein Steuern des Lüftungssystems des Fahrzeugs (1) zumindest in einem Bereich vor dem wenigstens einen Insassen (2) ist.

7. Verfahren nach einem der voranstehenden Ansprüche, wobei die zumindest eine gewählte fahrzeugseitige Maßnahme ein Absaugen von Luft vor dem wenigstens einen Insassen (2) ist.

8. Fahrzeug (1) mit
(a) zumindest einer Ermittlungseinheit (4) zum Ermitteln eines von zumindest einem Insassen (2) des Fahrzeugs (1) ausgehenden Risikos einer Tröpfcheninfektion,
(b) einer Wähleinheit (5) zum Wählen zumindest einer fahrzeugseitigen Maßnahme zum Verringern des Risikos einer Tröpfcheninfektion, wobei die zumindest eine fahrzeugseitige Maßnahme in Abhängigkeit von dem ermittelten Risiko einer Tröpfcheninfektion gewählt wird, und
(c) einer Durchführeinheit (6) zum Durchführen der zumindest einen gewählten fahrzeugseitigen Maßnahme zum Verringern des Risikos einer Tröpfcheninfektion in einem Innenraum (3) des Fahrzeugs (1), wobei das Fahrzeug (1) zur Durchführung eines Verfahrens nach einem der voranstehenden Ansprüche ausgebildet ist.

## Claims

1. Method for reducing a risk of droplet infection in an interior (3) of a vehicle (1), wherein the method comprises the steps:
(a) determining a risk of droplet infection emanating from at least one occupant (2) of the vehicle (1), wherein the risk of droplet infection emanating from the at least one occupant (2) of the vehicle (1) is determined on the basis of an optical detection of the at least one occupant, wherein the optical detection is set up for detecting a respiratory protection of the at least one occupant (2),
(b) selecting at least one vehicle-side measure for reducing the risk of droplet infection, wherein the at least one vehicle-side measure is selected depending on the determined risk of droplet infection, and
(c) implementing the at least one selected vehicle-side measure for reducing the risk of droplet infection.

2. Method according to Claim 1, wherein, for each of at least two occupants (2) of the vehicle (1), a risk of droplet infection emanating from the respective occupant (2) of the vehicle (1) is determined and the at least one vehicle-side measure for reducing the risk of droplet infection is selected individually for each occupant (2).

3. Method according to Claim 1 or 2, wherein a duration and/or an intensity of the at least one vehicle-side measure is selected depending on the determined risk of droplet infection.

4. Method according to one of the preceding claims, wherein the implementation of the at least one selected vehicle-side measure for reducing the risk of droplet infection is performed while the vehicle (1) is stationary and without occupants (2).

5. Method according to one of the preceding claims, wherein the at least one selected vehicle-side measure is that of at least partially opening at least one window (6) of the vehicle (1).

6. Method according to one of the preceding claims, wherein the at least one selected vehicle-side measure is that of controlling the ventilation system of the vehicle (1), at least in an area in front of the at least one occupant (2).

7. Method according to one of the preceding claims, wherein the at least one selected vehicle-side measure is that of extracting air in front of the at least one occupant (2).

8. Vehicle (1) with
(a) at least one determining unit (4) for determining a risk of droplet infection emanating from at least one occupant (2) of the vehicle (1),
(b) a selecting unit (5) for selecting at least one vehicle-side measure for reducing the risk of droplet infection, wherein the at least one vehicle-side measure is selected depending on the determined risk of droplet infection, and
(c) an implementing unit (6) for implementing the at least one selected vehicle-side measure for reducing the risk of droplet infection in an interior (3) of the vehicle (1), wherein the vehicle (1) is designed for implementing a method according to one of the preceding claims.

## Revendications

1. Procédé de réduction d'un risque d'infection par gouttelettes dans un espace intérieur (3) d'un véhicule (1), le procédé comprenant les étapes suivantes :
(a) déterminer un risque d'infection par gouttelettes émanant d'au moins un occupant (2) du véhicule (1), le risque d'infection par gouttelettes émanant d'au moins un occupant (2) du véhicule (1) étant déterminé sur la base d'une détection optique de l'au moins un occupant, la détection optique étant conçue pour détecter la protection respiratoire de l'au moins un occupant (2),
(b) choisir au moins une mesure côté véhicule pour réduire le risque d'infection par gouttelettes, l'au moins une mesure côté véhicule étant sélectionnée en fonction du risque déterminé d'infection par gouttelettes, et
(c) réaliser l'au moins une mesure choisie côté véhicule pour réduire le risque d'infection par gouttelettes.

2. Procédé selon la revendication 1, pour chacun d'au moins deux occupants (2) du véhicule (1), un risque d'infection par des gouttelettes émanant de l'occupant respectif (2) du véhicule (1) étant déterminé et l'au moins une mesure côté véhicule pour réduire le risque d'infection par gouttelettes étant choisie individuellement pour chaque occupant (2).

3. Procédé selon la revendication 1 ou 2, une durée et/ou une intensité de l'au moins une mesure côté véhicule étant choisie en fonction du risque déterminé d'infection par gouttelettes.

4. Procédé selon l'une des revendications précédentes, la réalisation de l'au moins une mesure côté véhicule choisie pour réduire le risque d'infection par gouttelettes étant effectuée pendant que le véhicule (1) est à l'arrêt et sans passagers (2) .

5. Procédé selon l'une des revendications précédentes, l'au moins une mesure côté véhicule qui a été choisie consistant à ouvrir au moins partiellement au moins une fenêtre (6) du véhicule (1).

6. Procédé selon l'une des revendications précédentes, l'au moins une mesure côté véhicule qui a été choisie consistant à commander le système de ventilation du véhicule (1) au moins dans une zone située devant l'au moins un occupant (2).

7. Procédé selon l'une des revendications précédentes, au moins une mesure côté véhicule qui a été choisie consistant à aspirer l'air devant l'au moins un occupant (2).

8. Véhicule (1) comprenant
(a) au moins une unité de détermination (4) destinée à déterminer un risque d'infection par gouttelettes émanant d'au moins un occupant (2) du véhicule (1),
(b) une unité de choix (5) destinée à choisir au moins une mesure côté véhicule pour réduire le risque d'infection par gouttelettes, l'au moins une mesure côté véhicule étant choisie en fonction du risque déterminé d'infection par gouttelettes, et
(c) une unité de réalisation (6) destinée à réaliser l'au moins une mesure côté véhicule qui a été choisie pour réduire le risque d'infection par gouttelettes dans un espace intérieur (3) du véhicule (1), le véhicule (1) étant conçu pour mettre en œuvre un procédé selon l'une des revendications précédentes.
